# FASCICULE DE BREVET EUROPEEN

(11) **EP 0 399 939 B1**
(45) Date de publication et mention de la délivrance du brevet: **07.09.1994**
(21) Numéro de dépôt: 90470022.6
(22) Date de dépôt: 26.04.1990
(51) Int. Cl.: A61C 1/07, A61C 17/02

(54) **Pièce à main de dentisterie**
Zahnärztliches Handstück
Dental hand piece

(30) Priorité: 26.05.1989 FR 8907137
(43) Date de publication de la demande: 28.11.1990
(73) Titulaire: MICRO MEGA S.A., F-25000 Besançon (FR)
(72) Inventeur: Euvrard, Hubert, F-25870 Auxon-Dessus (FR)
(74) Mandataire: Poupon, Michel

(56) Documents cités:
- FR-A- 2 505 172
- GB-A- 2 074 077
- US-A- 4 484 893

## Description

La présente invention a pour objet une pièce à main de dentisterie pouvant recevoir indifféremment des instruments vibrants pour les applications en endodontie ou pour les traitements parodontiques, ladite pièce à main comportant un corps oblong en une ou plusieurs parties, renfermant un arbre rotatif, les parties avant comprenant un arbre mené excité mécaniquement en vibration, ledit arbre étant monté dans le corps par des moyens semi-souples dont un au moins contribue à générer et localiser un noeud de vibrations vers l'avant et l'autre permet de maintenir l'arbre vibrant au centre de son logement, ledit arbre mené étant en outre sollicité sur sa longueur par des billes ou calottes sphériques, ladite pièce à main étant actionnée par un moteur à air ou électrique universellement utilisé sur les unités dentaires répondant à la norme ISO 3964.

On connaît déjà des pièces à main de ce type, mais qui présentent toutes un certain nombre d'inconvénients.

Ainsi on connait les appareils du type à ultra-sons qui, pour certains, permettent les deux applications précitées. L'inconvénient majeur de ces appareils est de nécessiter un équipement de commande spécifique pour la génération des ultra-sons.

On connait également des appareils dans lesquels la vibration est générée par un dispositif fonctionnant à l'air comprimé, tel que par exemple celui décrit dans le brevet FR-A-2 505 172 au nom de la demanderesse, qui ne nécessitent pas d'équipement spécifique puisqu'ils utilisent l'air comprimé généralement disponible sur les units dentaires, mais dont la mise en place impose que le système de connection soit compatible avec celui qu'a choisi le fabricant de l'unit, ce qui n'est pas simple car les systèmes de connection sont multiples.

Enfin, certains systèmes vibrants tels que ceux décrits dans la demande EP-A-0305357 et la demande EP-A-0293654 résolvent les problèmes précédents mais ont l'inconvénient de fonctionner:
- soit avec des instruments d'endodontie,
- soit avec des instruments type curette parodontique.

Ceci est également le cas du dispositif proposé dans le brevet US-A-4 484 893.

De plus ces dispositifs présentent des encombrements de têtes trop importants.

La présente invention a pour but de remédier à ces inconvénients des pièces à main dentaires de l'art antérieur et de proposer une pièce à main qui puisse recevoir tant des instruments canalaires pour les traitements endodontiques, que des instruments du type curette de détartrage, voire des instruments pour le nettoyage des poches sous-gingivales ou encore la vibration d'amalgame, ceci non limitativement.

Conformément à l'invention, ce résultat est obtenu avec une pièce à main du type décrit ci-dessus caractérisée en ce que :
- les billes ou calottes sphériques sont logées entre la douille de tête et la douille de corps dans des logements correspondants de la douille de tête, ces billes coopérant avec des évidements correspondants à l'arbre.
- et que l'arbre rotatif comporte à son extrémité distale une cage cylindrique à section longitudinale asymétrique par rapport à l'axe longitudinal de l'arbre, la cage enserrant un palier monté flottant à l'intérieur de la cage et relié à celle-ci par une liaison souple, le palier étant traversé par une portée longitudinale, décalée axialement par rapport à l'axe de l'arbre rotatif, de l'arbre mené.

Lesdits moyens souples seront essentiellement un ou plusieurs joints toriques.

On peut ainsi réaliser selon une caractéristique importante de l'invention une pièce à main dentaire qui soit actionnée par un moteur à air ou électrique universellement utilisé sur les unités dentaires répondant à la norme ISO 3964.

Avantageusement, le dispositif d'excitation en vibration consiste en un élément monté libre en rotation sur l'axe vibrant et coaxial par rapport à celui-ci mais désaxé par rapport à un élément d'entrainement en liaison avec l'arbre d'entrée de la pièce à main de type connu, la liaison entre l'élément d'entrainement et l'élément rotatif de l'axe vibrant étant une liaison souple.

A son extrémité distale, l'axe vibrant reçoit une tête qui peut maintenir un instrument d'endodontie ou une curette, par exemple.

La pièce à main conforme à l'invention peut en option comporter un dispositif d'irrigation simple si elle est montée sur un moteur muni d'un passage d'air de spray.

On comprendra mieux l'invention à l'aide de la description faite ci-après en référence aux dessins annexés dans lesquels :
- la figure 1 est une vue en coupe longitudinale d'une pièce à main conforme à l'invention ;
- la figure 1A est une coupe selon A-A de la figure 1 ;
- la figure 2 est une variante avec dispositif d'irrigation ;
- la figure 3A est une vue en coupe d'une tête spécifique pouvant être montée sur 1a pièce à main conforme à l'invention ;
- la figure 3B est une vue d'un manche d'outil conçu pour être utilisé avec la tête de la figure 3A ;
- la figure 4 est une vue en coupe longitudinale d'une tête spécifique utilisable en endodontie ;
- la figure 5 est une vue en coupe longitudinale d'une autre tête spécifique utilisable en endodontie ;
- la figure 6 est une vue en coupe longitudinale d'une pièce à main munie d'un dispositif d'amenée de liquide vers la tête du contre-angle ;
- la figure 7 est une vue en coupe longitudinale d'une pièce à main munie d'un dispositif d'amenée d'air sous pression.

De manière habituelle, la pièce à main selon l'invention, généralement référencée (1) comporte un corps (2) oblong en une ou plusieurs parties, renfermant un arbre rotatif (3) entrainé de manière en elle-même connue.

Dans la structure de l'invention, cet arbre comporte à son extrémité distale une cage (4) cylindrique à section longitudinale asymétrique par rapport à l'axe longitudinal de l'arbre.

La cage (4) enserre un palier (5) monté flottant à l'intérieur de ladite cage (4) et relié à celle-ci par une liaison souple (6), par exemple un joint torique.

Le palier (5) est traversé par une portée (7) longitudinale, décalée axialement par rapport à l'axe de l'arbre (3), d'un arbre mené (8) qui sera décrit ultérieurement.

On comprend que la rotation de l'arbre (3), au travers du palier (9), entraine à rotation la cage (4). Celle-ci entraine à son tour, par la liaison souple (6), le palier (5) et celui-ci sollicite la portée et l'arbre (8) mené dont celle-ci est solidaire.

Le mouvement qui en résulte est un mouvement oscillant.

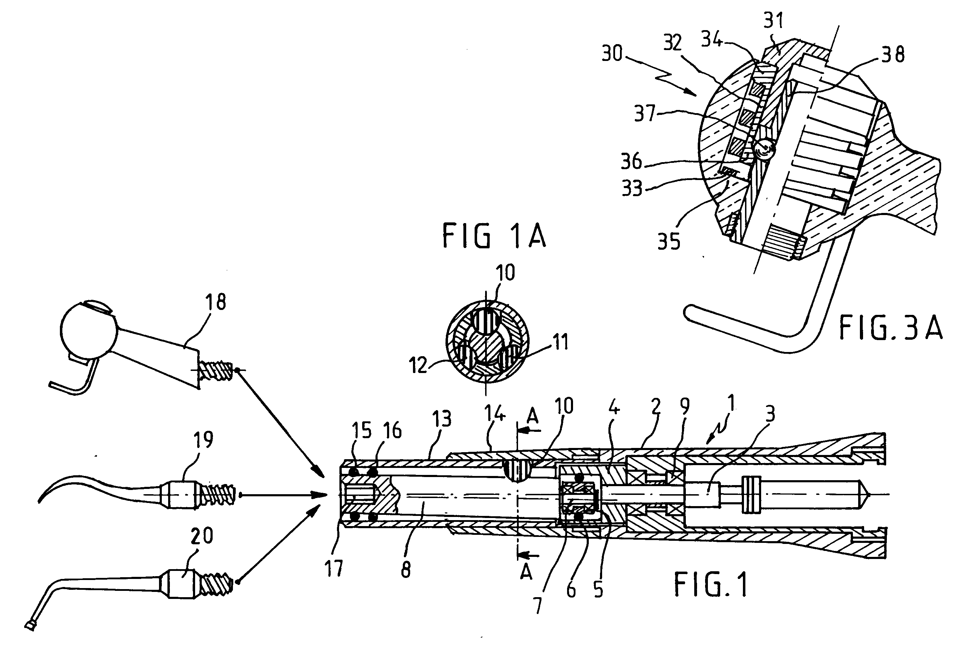

Pour focaliser un noeud de vibration à l'extrémité active de la pièce, l'arbre mené (8) est sollicité sur sa longueur par des billes (10,11,12), ou calottes sphériques, qui sont logées entre la douille de tête (13) et la douille de corps (14) dans des logements correspondants de la douille de tête. Ces billes coopèrent avec des évidements correspondants de l'arbre (8) représentés à la figure 1A.

A son extrémité distale, l'arbre (8) est guidé et amorti au niveau de la douille de tête (13) par un ou deux joints toriques (15,16). Il comporte un logement récepteur (17), fileté intérieurement, destiné à recevoir les instruments tels que tête (18) ou curettes (19,20).

On comprendra que l'action combinée de la rotation de la cage sollicitant la portée décalée axialement (7) et les appuis (10,11,12) forment une structure avec point d'appui et tripode qui entraine à l'extrémité distale de l'arbre (8) la création d'un noeud de vibration, dont l'énergie et l'amplitude sont transmises à l'extrémité de l'outil ou de la curette qui y est disposée.

L'absence de pièce en mouvement de rotation confère à l'ensemble de la tête une structure mécanique simple, donc fiable.

Si on utilise la tête (18) on pourra prévoir que l'axe vibrant (8) et l'axe moteur (3) soient percés sur toute leur longueur. Un perçage similaire est alors réalisé dans le col de la tête (18) qui débouche dans le mécanisme de serrage. On a alors une mise en pression de l'intérieur de la tête grâce à l'air de refroidissement du moteur, qui évite la pénétration de particules dans la tête.

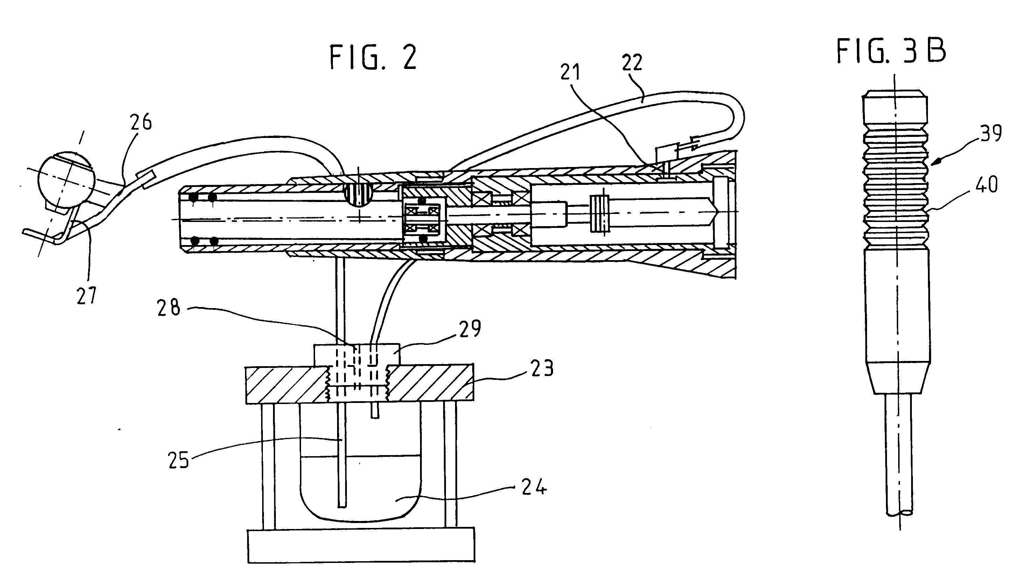

Dans la variante de la figure 2 on a prévu un dispositif simple d'irrigation.

Lorsque l'appareil est monté sur un moteur pourvu d'un passage d'air de spray, l'air de spray sous pression est sorti de la pièce à main par un alésage (21), et envoyé par un tube (22) vers un récipient (23) contenant le liquide d'irrigation (24) qui ainsi est mis sous pression, un tuyau (25) plongeant dans le liquide permet sous l'effet de la pression dès que l'appareil est connecté de faire parvenir le liquide au tuyau d'irrigation (26) situé sur le col (27) du corps de tête.

Un trou (28) dans le bouchon (29) du récipient permet la détente de l'air lorsque l'instrument est arrêté évitant ainsi que la distribution de liquide ne se poursuive.

La tête d'endodontie pourra être de tout type, par exemple à bouton-poussoir pour la mise en place ou le démontage de l'instrument avec un système de verrouillage par billes qui permet grâce à des stries réalisées dans le manche de l'instrument de régler la position de ce dernier par rapport à la butée dont ladite tête est pourvue.

Ainsi, en référence à la figure 3A, la tête (30) comporte un bouton poussoir (31) qui vient en prise directe avec une douille (32). La douille (32) est soumise à l'action de rappel d'un ressort hélicoïdal (33) qui prend appui d'une part sur un épaulement (34) de la tête et d'autre part sur le corps de tête (35). La douille (32) comporte en outre un épaulement annulaire (36) dirigé vers l'intérieur du corps de tête et qui sert de siège à une ou plusieurs billes (37).

En position de verrouillage de la tête de l'outil dans le corps de tête, au travers d'un douille (38) vissée dans ledit corps de tête, la bille (37) est en butée contre l'épaulement (36).

Si on appuie sur le bouton-poussoir (31), ce mouvement déplace l'épaulement (36) vers le bas par rapport à la tête et dégage la bille, ce qui déverrouille le manche de l'outil.

Le manche (39) représenté à la figure 3B comporte une pluralité de rainures radiales (40) coopérant avec lesdites billes.

Les rainures permettent d'assurer le réglage en longueur de travail de l'outil.

Elles auront de préférence un angle d'ouverture de l'ordre de 100°.

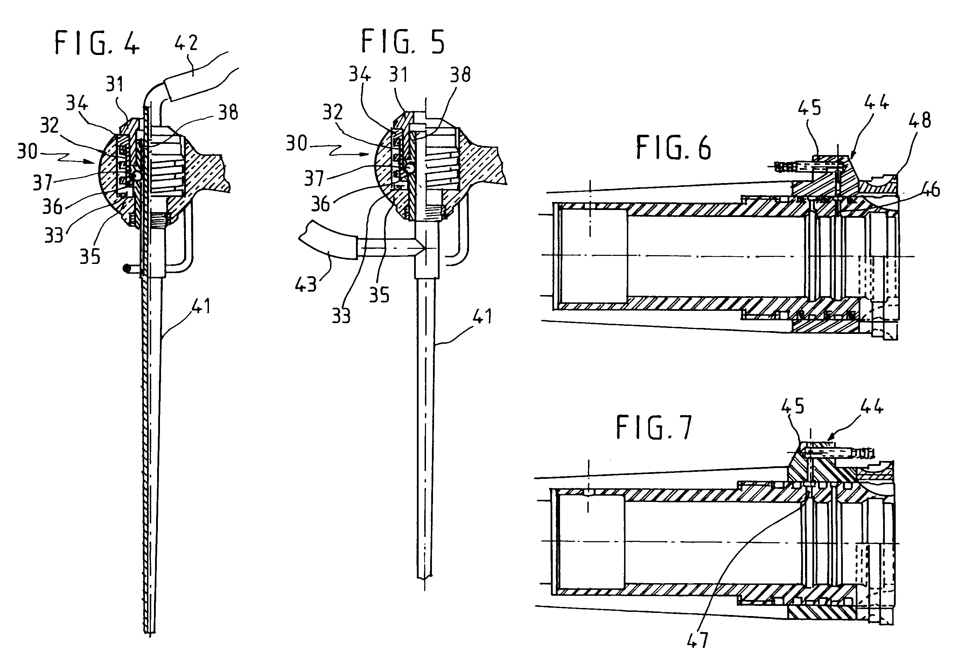

On se référera aux figures 4 et 5.

Dans les interventions endodontiques, un des problèmes principaux est de nettoyer le canal de tous les résidus dentinaires, ce qui est particulièrement difficile au niveau apical, car d'une part l'irrigant utilisé en cours de traitement ne peut pas descendre jusqu'à ce niveau de par la présente même de l'instrument, et d'autre part si l'on envoie un irrigant dans le canal après traitement, il n'y a pas au niveau apical suffisamment de turbulences pour faire remonter les boues dentinaires.

On utilise l'appareil suivant l'invention pour injecter un irrigant (liquide) jusqu'à l'apex et provoquer par les vibrations de l'instrument un niveau de turbulences suffisant pour que les boues dentinaires remontent et sortent. On utilise pour cela un instrument creux (41) de faible diamètre extérieur, qui pèrmet d'injecter du liquide sous pression jusqu'à l'apex, lequel liquide est mis en mouvement turbulent par les vibrations de l'instrument.

L'injection de liquide sous pression peut se faire au dessus de la tête par un tube (42) ou sous la tête par un tube (43).

L'instrument canalaire (41) peut, pour favoriser l'écoulement, être pourvu à sa pointe d'un ou deux biseaux.

On a représenté aux figures 6 et 7 une pièce à main avec un dispositif d'inversion (44) permettant d'amener un fluide vers la tête de la pièce à main.

Dans la représentation de la figure 6, une douille (45) permet d'envoyer le liquide sortant du moteur et arrivant à un canal (46) directement vers la tête du contre angle pour y être utilisé.

A la représentation de la figure 7, la douille (45) permet d'envoyer la pression de l'air sortant du moteur et arrivant à un canal (47) sur un système de commande pneumatique de l'arrosage, conforme par exemple à la demande de brevet 89-155951 au nom de la demanderesse.

Pour permettre cette inversion de sens, une bague (48) est montée de façon amovible par encliquetage sur le corps de pièce à main. Par ce procédé, le praticien peut choisir le mode d'arrosage :
- soit avec l'eau sortant du moteur
- soit avec un dispositif de distribution de sérum physiologique par exemple.

## Revendications

1. Pièce à main de dentisterie pouvant recevoir indifféremment des instruments vibrants pour les applications en endodontie ou pour les traitements parodontiques, ladite pièce à main comportant un corps (1) oblong en une ou plusieurs parties, renfermant un arbre rotatif (3), les parties avant comprenant un arbre mené (8) excité mécaniquement en vibration, ledit arbre étant monté dans le corps par des moyens semi-souples dont un au moins contribue à générer et localiser un noeud de vibrations vers l'avant et l'autre permet de maintenir l'arbre vibrant au centre de son logement, ledit arbre mené (8) étant en outre sollicité sur sa longueur par des billes (10,11,12) ou calottes sphériques, ladite pièce à main étant actionnée par un moteur à air ou électrique universellement utilisé sur les unités dentaires répondant à la norme ISO 3964, caractérisée en ce que :
- les billes (10,11,12) ou calottes sphériques, sont logées entre la douille de tête (13) et la douille de corps (14) dans des logements correspondants de la douille de tête, ces billes coopérant avec des évidements correspondants à l'arbre (8),
- et que l'arbre rotatif (3) comporte à son extrémité distale une cage (4) cylindrique à section longitudinale asymétrique par rapport à l'axe longitudinal de l'arbre, la cage (4) enserrant un palier (5) monté flottant à l'intérieur de ladite cage (4) et relié à celle-ci par une liaison souple (6), le palier (5) étant traversé par une portée (7) longitudinale, décalée axialement par rapport à l'axe de l'arbre (3), de l'arbre mené (8).

2. Pièce à main selon la revendication 1 caractérisée en ce que le dispositif d'excitation en vibration consiste en un élément monté libre en rotation sur l'axe vibrant et coaxial par rapport à celui-ci mais désaxé par rapport à un élément d'entrainement en liaison avec l'arbre d'entrée de la pièce à main de type connu, la liaison entre l'élément d'entrainement et l'élément rotatif de l'axe vibrant étant une liaison souple.

3. Pièce à main selon l'une quelconque des revendications 1 et 2 caractérisée en ce que à son extrémité distale, l'axe vibrant reçoit une tête qui peut maintenir un instrument d'endodontie ou une curette.

4. Pièce à main selon l'une quelconque des revendications 1 à 3 caractérisée en ce que la tête (30) comporte un bouton poussoir (31) qui vient en prise directe avec une douille (32), la douille (32) étant soumise à l'action de rappel d'un ressort helicoïdal (33) qui prend appui d'une part sur un épaulement (34) de la tête et d'autre part sur le corps de tête (35), la douille (32) comportant en outre un épaulement annulaire (36) dirigé vers l'intérieur du corps de tête et qui sert de siège à une ou plusieurs billes (37) et que en position de verrouillage de la tête de l'outil dans le corps de tête, au travers d'une douille (38) vissée dans ledit corps, la bille (37) est en butée contre l'épaulement (38).

5. Pièce à main selon la revendication 1, caractérisée en ce que dans la tête est disposé un outil dont le manche (39) comporte une pluralité de rainures radiales (40).

6. Pièce à main selon la revendication 5 caractérisée en ce que l'angle d'ouverture des rainures (40) est de l'ordre de 100°.

7. Pièce à main selon l'une quelconque des revendications 1 à 6 caractérisée en ce que, lorsqu'elle est montée sur un moteur pourvu d'un passage d'air de spray, l'air de spray sous pression est sorti de la pièce à main par un alésage (21), et envoyé par un tube (12) vers un récipient (23) contenant le liquide d'irrigation (24) qui ainsi est mis sous pression, un tuyau (25) plongeant dans le liquide permettant sous l'effet de la pression dès que l'appareil est connecté de faire parvenir le liquide au tuyau d'irrigation (26) situé sur le col (27) du corps de tête et que un trou (28) dans le bouchon (29) du récipient permet la détente de l'air lorsque l'instrument est arrêté évitant ainsi que la distribution de liquide ne se poursuive.

8. Pièce à main selon l'une quelconque des revendications 1 à 7 caractérisée en ce qu'elle est équipée d'une tête (18) ou de curettes (19,20).

9. Pièce à main selon la revendication 8 comportant une tête (18), caractérisée en ce que l'axe vibrant (8) et l'axe moteur (3) sont percés sur toute leur longueur, un perçage similaire étant réalisé dans le col de la tête (18) qui débouche dans le mécanisme de serrage.

10. Pièce à main selon la revendication 9 caractérisée en ce qu'elle comporte un instrument canalaire (41) alimenté en liquide sous pression par un tube (42 ; 43).

11. Pièce à main selon la revendication 10 caractérisée en ce que l'instrument canalaire (41) est pourvu à sa pointe de un ou deux biseaux.

12. Pièce à main selon l'une quelconque des revendications 1 à 11 caractérisée en ce qu'elle comporte une douille (45) permettant d'envoyer le liquide sortant du moteur et arrivant à un canal (46) directement vers la tête ou une pression d'air sortant du moteur et arrivant à un canal (47), l'inversion de sens de la douille (45) étant montée de façon amovible par encliquetage sur le corps de pièce à main.

## Claims

1. Dental hand-piece able to accommodate a variety of vibrating instruments for endodontical uses or for parodontical treatments, said hand-piece comprising an elongate body (1) formed from one or a plurality of parts and enclosing a rotary shaft (3), the front parts comprising a driven shaft (8) which is set in vibration mechanically, said shaft being mounted in the body by semi-flexible means, at least one of which means contributes towards generating and localising towards the front a node of vibrations, and the other means permits the shaft to be kept vibrating in the centre of its housing, said driven shaft (8) also being acted upon over its length by ball-bearings (10,11,12) or spherical portions, said hand-piece being activated by an air or electric motor universally used on dental units conforming to standard ISO 3964, characterised in that:
- the ball-bearings (10,11,12) or spherical portions are accommodated between the head sleeve (13) and the body sleeve (14) in corresponding housings of the head sleeve, these ball-bearings co-operating with corresponding recesses in the shaft (8); and in that:
- the rotary shaft (3) comprises at its distal end a cylindrical casing (4) having an asymmetrical longitudinal section relative to the longitudinal axis of the shaft, the casing (4) enclosing a stop member (5) pivotally mounted inside said casing (4) and connected thereto by a flexible connection (6), the stop member (5) being traversed by a longitudinal bearing (7) of the driven shaft, said bearing being axially offset relative to the axis of the shaft (3).

2. Hand-piece according to claim 1, characterised in that the device for setting it in vibration comprises an element which is freely rotatably mounted on the vibrating shaft and is coaxial relative to the latter but offset relative to a drive element connected to the input shaft of the hand-piece of known type, the connection between the drive element and the rotatable element of the vibrating shaft being a flexible connection.

3. Hand-piece according to any of claims 1 and 2, characterised in that, at its distal end, the vibrating shaft accommodates a head which may hold an endodontical instrument or a curette.

4. Hand-piece according to any of claims 1 to 3, characterised in that the head (30) comprises a push button (31) which connects directly with a sleeve (32), the sleeve (32) being subject to the return action of a helical spring (33) which is supported, on the one hand, by a shoulder (34) of the head and, on the other hand, on the head body (35), the sleeve (32) also comprising an annular shoulder (36), which is directed towards the inside of the head body and serves as a seating for one or a plurality of ball-bearings (37), and in that, when the head of the tool is locked in position in the head body, through a sleeve (38) screwed into said body, the ball-bearing (37) abuts against the shoulder (38).

5. Hand-piece according to claim 1, characterised in that a tool is disposed in the head, the handle (39) of which tool comprises a plurality of radial grooves (40).

6. Hand-piece according to claim 5, characterised in that the angle of opening of the grooves (40) is of the order of 100°.

7. Hand-piece according to any of claims 1 to 6, characterised in that, when it is mounted on a motor provided with an air spray passage, the pressurised air spray emerges from the hand-piece through a bore (21) and is sent through a tube (12) towards a vessel (23) containing the irrigation liquid (24), which is thereby pressurised, a tube (25) being immersed in the liquid and, as a result of the pressure as soon as the apparatus is connected, permitting the liquid to reach the irrigation tube (26) situated on the collar (27) of the head body, and in that a hole (28) in the stopper (29) of the vessel permits the release of the air when the instrument is stopped, thereby preventing the distribution of liquid from continuing.

8. Hand-piece according to any of claims 1 to 7, characterised in that it is provided with a head (18) or with curettes (19,20).

9. Hand-piece according to claim 8 comprising a head (18), characterised in that the vibrating shaft (8) and the motor shaft (3) are pierced throughout their entire length, a similar piercing being achieved in the collar of the head (18) which extends into the tightening mechanism.

10. Hand-piece according to claim 9, characterised in that it comprises a channelled instrument (41) which is supplied with pressurised liquid through a tube (42;43).

11. Hand-piece according to claim 10, characterised in that the channelled instrument (41) is provided with one or two bevels at its tip.

12. Hand-piece according to any of claims 1 to 11, characterised in that it comprises a sleeve (45) which permits the liquid emerging from the motor and reaching a channel (46) to be sent directly towards the head, or permits an air pressure emerging from the motor and reaching a channel (47) to be sent, the direction-reversing means of the sleeve (45) being detachably mounted by a ratchet mechanism on the body of the hand-piece.

## Patentansprüche

1. Zahnärztliches Handstück zum Aufnehmen unterschiedlicher schwingender Instrumente zur Anwendung in der Endodontie oder für Parodontosebehandlungen, wobei das Handstück einen länglichen Korpus (1) aus einem oder mehreren Teilen aufweist und eine drehbare Welle (3) umschließt, die vorderen Teile eine angetriebene Welle (8) aufweisen, welche mechanisch in Schwingung anregbar ist, wobei diese Welle in dem Korpus mit halbnachgiebigen Vorrichtungen eingebracht ist, von denen wenigstens eine zum Erzeugen und Eingrenzen eines Knotens von Schwingungen in die vordere Richtung beiträgt und die andere das Halten der schwingenden Welle in der Mitte ihrer Führung gestattet, die angetriebene Welle (8) weiterhin in ihrer Längsrichtung durch Kugeln (10, 11, 12) oder Kalotten beansprucht ist, das Handstück durch einen luftbeaufschlagten oder elektrischen Motor wie üblicherweise für zahnärztliche Einheiten in Übereinstimmung mit der Norm ISO 3964 verwendet angetrieben ist,
dadurch gekennzeichnet, daß
- die Kugeln (10, 11, 12) oder Kalotten zwischen der Kopfhülse (13) und der Korpushülse (14) in zugeordneten Aufnahmevorrichtungen der Kopfhülse angeordnet sind, wobei die Kugeln mit zugeordneten Ausnehmungen der Welle (8) im Eingriff stehen,
- und daß die drehbare Welle (3) an ihrem distalen Ende ein zylindrisches Gehäuse (4) mit einem in Bezug auf die Längsachse der Welle asymmetrischen Längsschnitt aufweist, wobei das Gehäuse (4) ein Lager (5) aufweist, das im Innern des Gehäuses (4) beweglich angebracht und mit diesem über eine nachgiebige Verbindung (6) verbunden ist, wobei das Lager (5) durch eine längsgerichtete Lauffläche (7) der angetriebene Welle (8), die axial in Bezug auf die Achse der Welle (3) versetzt ist, durchquert ist.

2. Handstück nach Anspruch 1, dadurch gekennzeichnet, daß die Vorrichtung zur Schwingungsanregung aus einem Element besteht, das auf der Schwingungsachse drehbar und koaxial in Bezug auf diese, jedoch versetzt in Bezug auf ein mit der Eingangswelle des Handstückes bekannten Typs in Eingriff stehendes Antriebselement angebracht ist, wobei das Bindeglied zwischen dem Antriebselement und dem drehbaren Element der Schwingungsachse ein geschmeidiges Verbindungselement ist.

3. Handstück nach einem der Ansprüche 1 und 2, dadurch gekennzeichnet, daß an seinem distalen Ende die Schwingungsachse ein Kopfstück aufnimmt, mit dem ein Instrument zur Endodontie oder eine Kürette haltbar ist.

4. Handstück nach einem der Ansprüche 1 bis 3, dadurch gekennzeichnet, daß das Kopfstück (30) einen Druckknopf (31) aufweist, der unmittelbar mit einer Hülse (32) im Eingriff steht, wobei die Hülse (32) der Rückstellwirkung einer schraubenförmigen Feder (33) unterworfen ist, die einerseits an einem Absatz (34) des Kopfstückes und andererseits auf dem Kopfstückkorpus (35) anliegt, wobei die Hülse (32) weiterhin einen kreisförmigen Vorsprung (36) aufweist, der im Innern des Kopfstückkorpus angeordnet ist und der als Aufnahme für eine oder mehrere Kugeln (37) dient, und daß in der Verriegelungsposition des Werkzeugkopfes in dem Kopfstückkorpus durch eine in den Korpus eingeschraubte Hülse (38) hindurch die Kugel (37) im Anschlag gegen den Vorsprung (36) ist.

5. Handstück nach Anspruch 1, dadurch gekennzeichnet, daß in dem Kopfstück ein Werkzeug angeordnet ist, dessen Halter (39) eine Anzahl von radialen Einkerbungen (40) aufweist.

6. Handstück nach Anspruch 5, dadurch gekennzeichnet, daß der Öffnungswinkel der Einkerbungen (40) im Bereich von etwa 100° ist.

7. Handstück nach einem der Ansprüche 1 bis 6, dadurch gekennzeichnet, daß bei einem Anbringen desselben auf einem zum Durchlaß von Sprühluft vorgesehenen Motors die Sprühluft unter Druck aus dem Handstück über eine Bohrung (21) austritt und über einen Schlauch (22) zu einem die Befeuchtungsflüssigkeit (24) aufnehmenden Aufnahmebehälter (23) geleitet ist, der mit Druck beaufschlagt ist, wobei ein in die Flüssigkeit eintauchendes Rohr (25) unter dem Druckeffekt ab dem Anschließen der Vorrichtung das Eintreten der Flüssigkeit in den auf dem Hals (27) des Kopfstückkorpus angeordneten Befeuchtungsrohres (26) gestattet, und daß eine Öffnung (28) in dem Verschlußstück (29) des Aufnahmebehälters das Entspannen der Luft bei einem Anhalten des Instrumentes gestattet, so daß ein sich fortsetzendes Verteilen der Flüssigkeit vermieden ist.

8. Handstück nach einem der Ansprüche 1 bis 7, dadurch gekennzeichnet, daß es mit einem Kopf (18) oder Küretten (19, 20) ausgestattet ist.

9. Handstück nach Anspruch 8 mit einem Kopf (18), dadurch gekennzeichnet, daß die Schwingungsachse (8) und die sich bewegende Achse (3) über ihre gesamte Länge durchbohrt sind, wobei eine ähnliche Bohrung in dem Hals des Kopfes (18) vorgesehen ist, die an dem Einspannmechanismus mündet.

10. Handstück nach Anspruch 9, dadurch gekennzeichnet, daß es ein röhrenartiges Instrument (41) aufweist, das unter Druck über eine Röhre (42, 43) mit Flüssigkeit versorgt ist.

11. Handstück nach Anspruch 10, dadurch gekennzeichnet, daß das röhrenartige Instrument (41) an seiner Spitze mit einer oder zwei Abschrägungen versehen ist.

12. Handstück nach einem der Ansprüche 1 bis 11, dadurch gekennzeichnet, daß es eine Hülse (45) aufweist, mit der eine aus dem Motor austretende und einen Kanal (46) beaufschlagende Flüssigkeit zu dem Kopfstück oder ein aus dem Motor austretender und einen Kanal (47) beaufschlagender Luftdruck leitbar ist, wobei die Umkehrung der Richtung der Hülse (45) durch Verklinkung abnehmbar auf dem Korpus des Handstückes angebracht ist.
